# EUROPEAN PATENT APPLICATION

(11) **EP 4 434 775 A1**
(43) Date of publication of application: **25.09.2024**
(21) Application number: 24156829.4
(22) Date of filing: 09.02.2024
(51) Int. Cl.: B60C 19/00, B60B 21/12

(54) **TIRE ASSEMBLY**

(30) Priority: 22.03.2023 JP 2023045745
(71) Applicant: Sumitomo Rubber Industries, Ltd., Kobe-shi, Hyogo 651-0072 (JP)
(72) Inventor: NINOMIYA, Hiroaki, Kobe-shi, Hyogo, 651-0072 (JP)
(74) Representative: Manitz Finsterwald Patent- und Rechtsanwaltspartnerschaft mbB

(57) **Abstract**

The present invention is directed to a tire assembly 1 including a rim 2 and a pneumatic tire 3 mounted on the rim 2. A sound damper 9 is provided in a tire inner cavity 1c, defined by an outer surface 2s of the rim 2 and an inner surface 3s of the pneumatic tire 3, so as to extend in a tire circumferential direction. The rim 2 has a rim diameter RD of not greater than 18 inches. A ratio SH/SW of a cross-sectional height SH to a tire cross-sectional width SW of the pneumatic tire 3 is 30% to 45%. A ratio RW/SW of a rim width RW of the rim 2 to the tire cross-sectional width SW is 78% to 99%. The sound damper 9 includes a sponge material 9a adhered to at least one of the outer surface 2s of the rim 2 and the inner surface 3s of the pneumatic tire 3. The sponge material 9a has a volume of not less than 0.4% of a total volume of the tire inner cavity 1c.

## Description

### BACKGROUND OF THE INVENTION

### Field of the Invention

The present invention relates to a tire assembly including a rim and a pneumatic tire mounted on the rim.

### Background Art

Hitherto, a tire assembly in which a sound damper is provided in a tire inner cavity, defined by an outer surface of a rim and an inner surface of a pneumatic tire, so as to extend in the tire circumferential direction, has been known. For example, Japanese Laid-Open Patent Publication No. 2006-306302 proposes an assembly which includes a pneumatic tire and a rim and in which a sound damper made of a specific sponge material is placed in a tire inner cavity to reduce road noise during running.

However, the assembly in Japanese Laid-Open Patent Publication No. 2006-306302 is intended to be used as a general tire for a passenger car, and is not intended as a high-load small-diameter tire used for a low-floor small bus and the like.

The present invention has been made in view of the above circumstances, and a main object of the present invention is to provide a tire assembly that can reduce road noise even in the case of a high-load small-diameter tire.

### SUMMARY OF THE INVENTION

The present invention is directed to a tire assembly including a rim and a pneumatic tire mounted on the rim, wherein a sound damper is provided in a tire inner cavity, defined by an outer surface of the rim and an inner surface of the pneumatic tire, so as to extend in a tire circumferential direction, the rim has a rim diameter RD of not greater than 18 inches, a ratio SH/SW of a cross-sectional height SH to a tire cross-sectional width SW of the pneumatic tire is 30% to 45%, a ratio RW/SW of a rim width RW of the rim to the tire cross-sectional width SW is 78% to 99%, the sound damper includes a sponge material adhered to at least one of the outer surface of the rim and the inner surface of the pneumatic tire, and the sponge material has a volume of not less than 0.4% of a total volume of the tire inner cavity.

By having the above-described configuration, the tire assembly of the present invention can reduce road noise even in the case of a high-load small-diameter tire.

### BRIEF DESCRIPTION OF THE DRAWINGS

FIG. 1 is a cross-sectional view showing a tire assembly of one embodiment of the present invention;
FIG. 2 is a cross-sectional view of a pneumatic tire of the embodiment; and
FIG. 3 is an end view of the tire assembly at a tire equator.

### DETAILED DESCRIPTION

Hereinafter, an embodiment of the present invention will be described in detail with reference to the drawings.

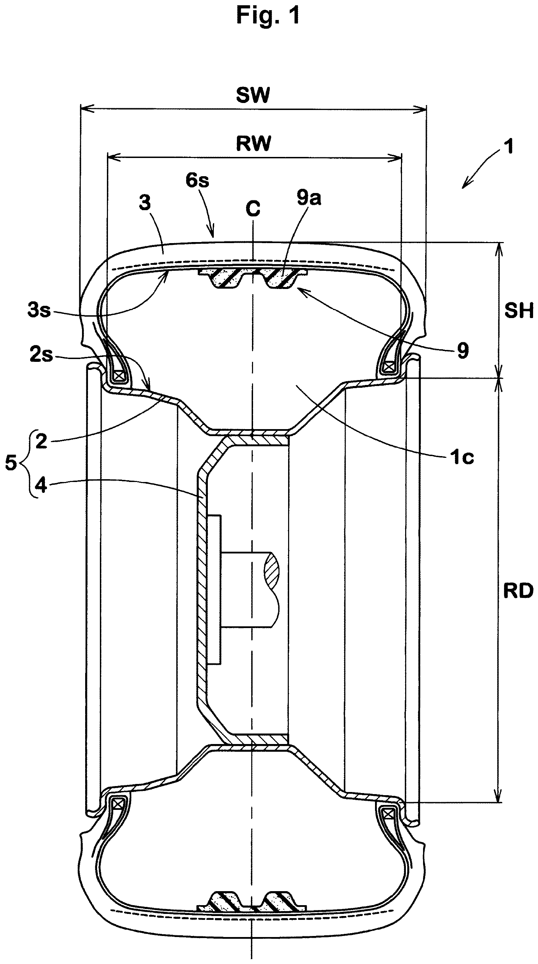

FIG. 1 is a tire meridian cross-sectional view showing a tire assembly 1 in a standardized state of the present embodiment. Here, the "standardized state" is a state where a pneumatic tire 3 is mounted on a rim 2 and adjusted to a standardized internal pressure and no load is applied to the pneumatic tire 3. Hereinafter, unless otherwise specified, dimensions and the like of components of the tire assembly 1 are values measured in the standardized state.

If there is a standard system including a standard on which the pneumatic tire 3 is based, the "standardized internal pressure" is an air pressure that is defined for each tire by the standard, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the pneumatic tire 3 is based, the "standardized internal pressure" is an air pressure that is defined for each tire by the manufacturer or the like.

As shown in FIG. 1, the tire assembly 1 is suitably used as a high-load small-diameter tire such as a tire used for a low-floor small bus, for example. The tire assembly 1 of the present embodiment is an assembly including the rim 2 and the pneumatic tire 3 mounted on the rim 2.

The rim 2, for example, is combined with a disc 4 to form a wheel 5. That is, the wheel 5 includes the rim 2 and the disc 4. The rim 2 of the present embodiment is welded to the disc 4. The rim 2 may, for example, be integrally formed with the disc 4. In addition, the rim 2 may, for example, be divided in the tire axial direction and sandwich the disc 4.

The rim 2 of the present embodiment has a rim diameter RD of not greater than 18 inches. The tire assembly 1 of the present embodiment is intended for such a small-diameter tire. Such a tire assembly 1 serves to reduce a tire outer diameter, and can improve the space efficiency in a vehicle space when mounted on a low-floor small bus, for example. From such a viewpoint, the rim diameter RD of the rim 2 is more preferably not greater than 15 inches.

The rim diameter RD of the rim 2 is preferably not less than 10 inches. Such a tire assembly 1 can ensure a space for placing a large-diameter brake, an in-wheel motor, etc., on the inner side in the tire radial direction of the rim 2. From such a viewpoint, the rim diameter RD of the rim 2 is more preferably not less than 12 inches.

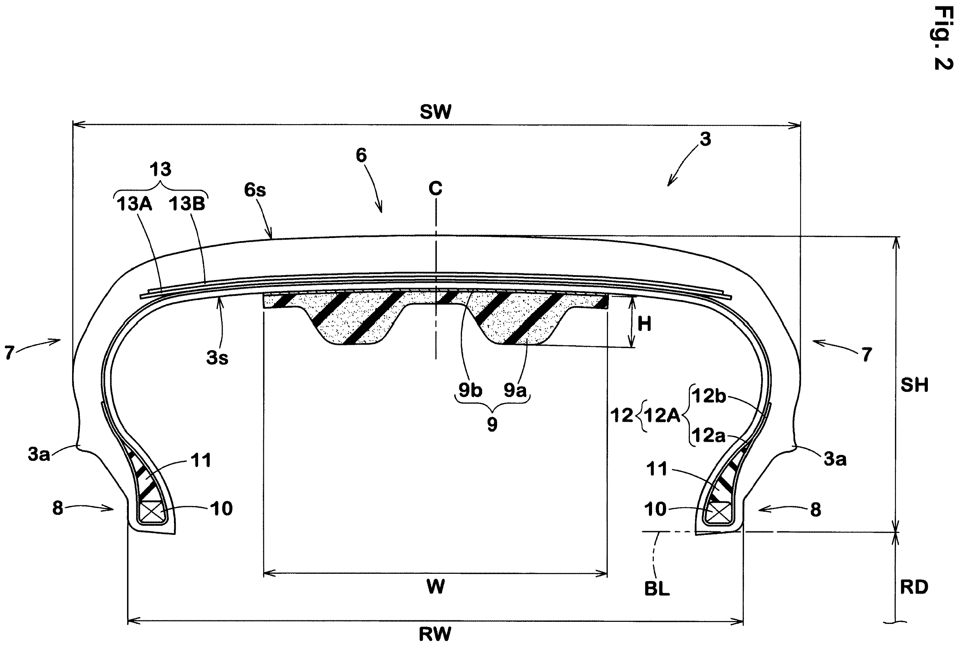

FIG. 2 is a tire meridian cross-sectional view of the pneumatic tire 3 in the standardized state of the present embodiment. As shown in FIG. 1 and FIG. 2, the pneumatic tire 3 of the present embodiment includes a tread portion 6, a pair of sidewall portions 7, and a pair of bead portions 8. The tread portion 6 has a ground-contact surface 6s which comes into contact with a road surface during rolling.

The pair of sidewall portions 7 extend inward in the tire radial direction from both sides in the tire axial direction of the tread portion 6, respectively. The pair of bead portions 8 are located inward of the sidewall portions 7 in the tire radial direction, respectively, and come into contact with the rim 2 when mounted on the rim 2.

The ratio SH/SW of a cross-sectional height SH to a tire cross-sectional width SW of the pneumatic tire 3 of the present embodiment is 30% to 45%. Such a pneumatic tire 3 can increase the volume of a tire inner cavity 1c while reducing the tire outer diameter, and can be suitably used, for example, as a high-load small-diameter tire required for a low-floor small bus.

Here, the tire cross-sectional width SW is the width in the tire axial direction at a maximum width position of the sidewall portions 7, not including protruding portions, such as letters and patterns, and a rim guard 3a. In addition, the cross-sectional height SH is the height in the tire radial direction from a bead base line BL for defining the rim diameter RD to the ground-contact surface 6s at a tire equator C. Moreover, the tire inner cavity 1c is a space defined by an outer surface 2s of the rim 2 and an inner surface 3s of the pneumatic tire 3.

The ratio RW/SW of a rim width RW of the rim 2 to the tire cross-sectional width SW is preferably 78% to 99%. Such a rim 2 serves to increase the volume of the tire inner cavity 1c since the rim width RW is large relative to the tire cross-sectional width SW.

A sound damper 9 is provided in the tire inner cavity 1c of the present embodiment so as to extend in the tire circumferential direction. The sound damper 9 includes a sponge material 9a adhered to at least one of the outer surface 2s of the rim 2 and the inner surface 3s of the pneumatic tire 3, in the present embodiment, to the inner surface 3s of the pneumatic tire 3. Such a sound damper 9 can suppress cavity resonance sound generated in the tire inner cavity 1c and reduce the road noise of the tire assembly 1.

The sponge material 9a of the present embodiment has a volume of not less than 0.4% of the total volume of the tire inner cavity 1c. Such a sponge material 9a can reliably achieve the effect of reducing road noise by the sound damper 9. Therefore, the tire assembly 1 of the present embodiment can reduce road noise even in the case of a high-load small-diameter tire.

Here, the volume of the sponge material 9a is an apparent volume obtained from the outer shape of the sponge material 9a including the space inside the sponge material 9a, and is a value measured in a state where the pneumatic tire 3 is removed from the rim 2. In addition, the total volume of the tire inner cavity 1c corresponds to the volume in the standardized state of the tire inner cavity 1c in a state where the sponge material 9a is not provided therein.

As a more preferable mode, the volume of the sponge material 9a is not greater than 20% of the total volume of the tire inner cavity 1c. Such a sponge material 9a can both reduce both the cost of the tire assembly 1 and the road noise of the tire assembly 1.

As shown in FIG. 2, the sponge material 9a is preferably placed at a center position in the tire axial direction of the tire inner cavity 1c, including a position on the tire equator C. Such a sponge material 9a can efficiently suppress cavity resonance sound generated near the tire equator C at which vibration due to input from a road surface is the largest.

The ratio W/SW of a width W in the tire axial direction of the sponge material 9a to the tire cross-sectional width SW is preferably 10% to 70%. When the ratio W/SW is not less than 10%, the effect of reducing road noise by the sound damper 9 can be reliably achieved. When the ratio W/SW is not greater than 70%, both reduction of the cost of the tire assembly 1 and reduction of the road noise of the tire assembly 1 can be achieved.

Since the sponge material 9a of the present embodiment is placed at the center position in the tire axial direction of the tire inner cavity 1c, road noise can be efficiently reduced even if the width W is small. From such a viewpoint, the ratio W/SW is more preferably not greater than 50% and further preferably not greater than 30%. Here, the width W of the sponge material 9a is a value measured in a state where the pneumatic tire 3 is removed from the rim 2.

The sponge material 9a preferably has a maximum height H in the tire radial direction of not greater than 30 mm. Such a sponge material 9a can suppress peeling during high speed running, and can improve the durability of the tire assembly 1. From such a viewpoint, the maximum height H of the sponge material 9a is more preferably not greater than 25 mm and further preferably not greater than 20 mm.

The lower limit of the maximum height H of the sponge material 9a is not particularly limited, but is preferably not less than 10 mm in order to reliably achieve the effect of reducing road noise by the sound damper 9. Here, the maximum height H of the sponge material 9a is a value measured in a state where the pneumatic tire 3 is removed from the rim 2.

The sponge material 9a preferably has a hardness of 10 to 250 N. When the hardness of the sponge material 9a is not less than 10 N, cavity resonance sound can be efficiently suppressed. When the hardness of the sponge material 9a is not greater than 250 N, even if the sponge material 9a is adhered to the inner surface 3s of the pneumatic tire 3, the sponge material 9a can follow deformation caused by contact of the ground-contact surface 6s with the ground and suppress peeling. Here, the hardness of the sponge material 9a is a value measured according to the method A specified in JIS K6400-2.

The sponge material 9a preferably has a tensile strength of not less than 70 kPa. When the tensile strength of the sponge material 9a is not less than 70 kPa, even if the sponge material 9a is adhered to the inner surface 3s of the pneumatic tire 3 and becomes deformed due to contact of the ground-contact surface 6s with the ground, the sponge material 9a is not damaged, and the durability of the sponge material 9a can be improved. Here, the tensile strength of the sponge material 9a is a value measured according to the standards of JIS K6400-5.

The sponge material 9a preferably has a specific gravity of 0.014 to 0.052. When the specific gravity of the sponge material 9a is not less than 0.014, cavity resonance sound can be efficiently suppressed. When the specific gravity of the sponge material 9a is not greater than 0.052, weight increase can be suppressed. Here, the specific gravity of the sponge material 9a is a value converted from an apparent density measured according to JIS K7222.

The sound damper 9 includes, for example, an adhesive layer 9b for adhering the sponge material 9a to the outer surface 2s of the rim 2 or the inner surface 3s of the pneumatic tire 3. Such a sound damper 9 can be firmly adhered to the outer surface 2s of the rim 2 or the inner surface 3s of the pneumatic tire 3, thereby improving the durability of the sound damper 9.

A cross-sectional shape of the sponge material 9a is a shape having two protruding portions in FIG. 2, but is not limited to such a shape, and may be, for example, a rectangular shape, or may be a semicircular shape, a trapezoidal shape, a triangular shape, or the like.

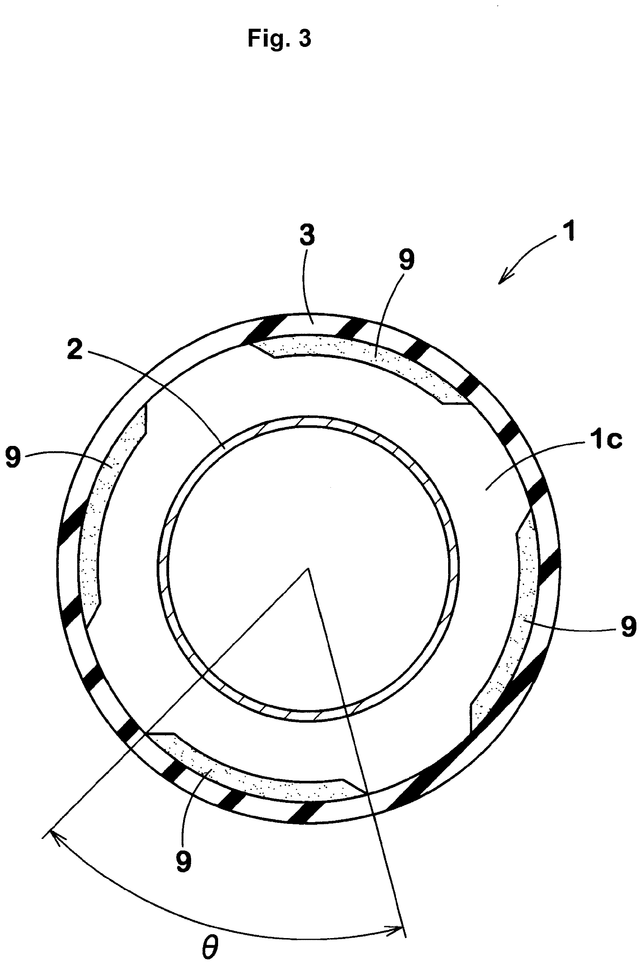

FIG. 3 is an end view of the tire assembly 1 at the tire equator C. As shown in FIG. 3, the sponge material 9a of the present embodiment is partially provided in the tire circumferential direction. Such a sponge material 9a can suppress weight increase and reduce the cost.

A total sum Σθ of angles θ in the tire circumferential direction over which the sponge material 9a is provided is preferably 108 to 270°. When the total sum Σθ is not less than 108°, cavity resonance sound can be reliably suppressed. When the total sum Σθ is not greater than 270°, weight increase can be suppressed and the cost can be reduced.

As shown in FIG. 2, each bead portion 8 includes, for example, an annular bead core 10 extending in the tire circumferential direction, and a bead apex 11 extending outward in the tire radial direction from the bead core 10. The bead core 10 is formed, for example, from a steel wire. The bead apex 11 is formed, for example, from a hard rubber. Such a bead portion 8 has high stiffness, which serves to suppress deformation in a load-applied state and reduce the road noise of the tire assembly 1.

The pneumatic tire 3 of the present embodiment includes a carcass 12 extending between the pair of bead portions 8, and a belt layer 13 provided in the tread portion 6. The belt layer 13 is provided, for example, outward of the carcass 12 in the tire radial direction.

The carcass 12 includes at least one carcass ply, in the present embodiment, one carcass ply 12A. The carcass ply 12A preferably includes a body portion 12a extending from the tread portion 6 through the sidewall portions 7 to the bead cores 10 of the bead portions 8, and turned-up portions 12b connected to the body portion 12a and turned up around the bead cores 10 from the inner side to the outer side in the tire axial direction. Such a carcass 12 serves to improve the stiffness of each bead portion 8 and reduce the road noise of the tire assembly 1.

The carcass ply 12A includes, for example, carcass cords (not shown) each composed of an organic fiber cord. Examples of the organic fiber cord include a cord of a hybrid fiber of two or more fibers or one fiber selected from the group consisting of polyethylene terephthalate fibers, polyethylene naphthalate fibers, nylon fibers, aramid fibers, and rayon fibers.

The belt layer 13 includes at least one belt ply, preferably includes two or more belt plies, and includes two belt plies 13A and 13B in the present embodiment. The two belt plies 13A and 13B include, for example, a first belt ply 13A located on the inner side in the tire radial direction and a second belt ply 13B located outward of the first belt ply 13A. Such a belt layer 13 can improve the stiffness of the tread portion 6 and can reduce the road noise of the tire assembly 1.

The belt plies 13A and 13B each include, for example, a belt cord (not shown) composed of a steel cord. The belt cord may be, for example, a single steel wire or a twisted wire obtained by twisting a plurality of steel filaments together.

The belt cord is arranged, for example, at an angle of 10 to 30° with respect to the tire circumferential direction. The belt cord of the first belt ply 13A and the belt cord of the second belt ply 13B are preferably tilted relative to the tire circumferential direction in directions opposite to each other.

Such a belt layer 13 can increase the stiffness of the tread portion 6 in a well-balanced manner and reduce the road noise of the tire assembly 1. Here, the angle of each belt cord is an angle in the pneumatic tire 3 in the standardized state, and can be confirmed, for example, by partially peeling off the tread portion 6.

Although the particularly preferred embodiment of the present invention has been described in detail above, the present invention is not limited to the above-described embodiment, and various modifications can be made to implement the present invention.

### [Additional Note]

The present invention is as follows.

### [Present Invention 1]

A tire assembly including a rim and a pneumatic tire mounted on the rim, wherein
a sound damper is provided in a tire inner cavity, defined by an outer surface of the rim and an inner surface of the pneumatic tire, so as to extend in a tire circumferential direction,
the rim has a rim diameter RD of not greater than 18 inches,
a ratio SH/SW of a cross-sectional height SH to a tire cross-sectional width SW of the pneumatic tire is 30% to 45%,
a ratio RW/SW of a rim width RW of the rim to the tire cross-sectional width SW is 78% to 99%,
the sound damper includes a sponge material adhered to at least one of the outer surface of the rim and the inner surface of the pneumatic tire, and
the sponge material has a volume of not less than 0.4% of a total volume of the tire inner cavity.

### [Present Invention 2]

The tire assembly according to Present Invention 1, wherein the rim diameter RD is not less than 10 inches.

### [Present Invention 3]

The tire assembly according to Present Invention 1 or 2, wherein the volume of the sponge material is not greater than 20% of the total volume of the tire inner cavity.

### [Present Invention 4]

The tire assembly according to any one of Present Inventions 1 to 3, wherein
the sponge material is partially provided in the tire circumferential direction, and
a total sum of angles in the tire circumferential direction over which the sponge material is provided is 108 to 270°.

### [Present Invention 5]

The tire assembly according to any one of Present Inventions 1 to 4, wherein a ratio W/SW of a width W in a tire axial direction of the sponge material to the tire cross-sectional width SW is 10% to 70%.

### [Present Invention 6]

The tire assembly according to any one of Present Inventions 1 to 5, wherein the sponge material has a maximum height in a tire radial direction of not greater than 30 mm.

### [Present Invention 7]

The tire assembly according to any one of Present Inventions 1 to 6, wherein the sponge material has a hardness of 10 to 250 N.

### [Present Invention 8]

The tire assembly according to any one of Present Inventions 1 to 7, wherein the sponge material has a tensile strength of not less than 70 kPa.

### [Present Invention 9]

The tire assembly according to any one of Present Inventions 1 to 8, wherein the sponge material has a specific gravity of 0.014 to 0.052.

### [Present Invention 10]

The tire assembly according to any one of Present Inventions 1 to 9, used for a low-floor small bus.

## Claims

1. A tire assembly (1) comprising a rim (2) and a pneumatic tire (3) mounted on the rim (2), wherein
a sound damper (9) is provided in a tire inner cavity (1c), defined by an outer surface (2s) of the rim (2) and an inner surface (3s) of the pneumatic tire (3), so as to extend in a tire circumferential direction,
the rim (2) has a rim diameter RD of not greater than 18 inches,
a ratio SH/SW of a cross-sectional height SH to a tire cross-sectional width SW of the pneumatic tire (3) is 30% to 45%,
a ratio RW/SW of a rim width RW of the rim (2) to the tire cross-sectional width SW is 78% to 99%,
the sound damper (9) includes a sponge material (9a) adhered to at least one of the outer surface (2s) of the rim (2) and the inner surface (3s) of the pneumatic tire (3), and
the sponge material (9a) has a volume of not less than 0.4% of a total volume of the tire inner cavity (1c).

2. The tire assembly (1) according to claim 1, wherein the rim diameter RD is not less than 10 inches.

3. The tire assembly (1) according to claim 1 or 2, wherein the volume of the sponge material (9a) is not greater than 20% of the total volume of the tire inner cavity (1c).

4. The tire assembly (1) according to any one of claims 1 to 3, wherein
the sponge material (9a) is partially provided in the tire circumferential direction, and
a total sum (Σθ) of angles (θ) in the tire circumferential direction over which the sponge material (9a) is provided is 108 to 270°.

5. The tire assembly (1) according to any one of claims 1 to 4, wherein a ratio W/SW of a width W in a tire axial direction of the sponge material (9a) to the tire cross-sectional width SW is 10% to 70%.

6. The tire assembly (1) according to any one of claims 1 to 5, wherein the sponge material (9a) has a maximum height (H) in a tire radial direction of not greater than 30 mm.

7. The tire assembly (1) according to any one of claims 1 to 6, wherein the sponge material (9a) has a hardness of 10 to 250 N.

8. The tire assembly (1) according to any one of claims 1 to 7, wherein the sponge material (9a) has a tensile strength of not less than 70 kPa.

9. The tire assembly (1) according to any one of claims 1 to 8, wherein the sponge material (9a) has a specific gravity of 0.014 to 0.052.

10. The tire assembly (1) according to any one of claims 1 to 9, used for a low-floor small bus.
